# EUROPEAN PATENT APPLICATION

(11) **EP 1 698 859 A1**
(43) Date of publication of application: **06.09.2006**
(21) Application number: 04807254.0
(22) Date of filing: 17.12.2004
(51) Int. Cl.: G01C 21/00

(54) **NAVIGATION DEVICE**

(30) Priority: 26.12.2003 JP 2003433833
(71) Applicant: Matsushita Electric Industries Co., Ltd., Kadoma-shi, Osaka 571-8501 (JP)
(72) Inventor: TERADA, Tomohiro, Chuo-ku, Osaka-shi, Osaka 540-6319 (JP); NAKANO, Nobuyuki, Chuo-ku, Osaka-shi, Osaka 540-6319 (JP); IWAMI, Ryoutarou, Chuo-ku, Osaka-shi, Osaka 540-6319 (JP); TAKAHASHI, Takeshi, Chuo-ku, Osaka-shi, Osaka 540-6319 (JP)
(74) Representative: Pautex Schneider, Nicole Véronique
(86) International application number: PCT/JP2004/018896
(87) International publication number: WO 2005/064275

(57) **Abstract**

A navigation device, in order to allow a user to depart for his/her destination immediately, and to provide the user with guidance information in accordance with an appropriate route to the destination, comprises an area input section (1) for the user to input a name of an area neighboring his/her destination, an arithmetic processing section (4), which searches for a route which leads the user to the area whose name is inputted in the area input section, and provides the user with guidance, in accordance with the route found by the search, so as to guide the user to the area whose name is inputted in the area input section (1). Also, the arithmetic processing section (4) specifies, after the guidance to guide the user to the area has started, a destination by exchanging a dialogue with the user. Then, the arithmetic processing section (4) selects a route which leads the user to the destination, and provides the user with guidance so as to guide the user to the destination.

## Description

### TECHNICAL FIELD

The present invention relates to a navigation device, and more particularly to a navigation device operable to provide a user with guidance in accordance with a route which is found by a route search.

### BACKGROUND ART

According to a general navigation device, once a user sets a destination, to which the user intends to drive, a route connecting a starting point to the destination is searched for, and guidance is provided to the user in accordance with the route found by the search.

However, setting a destination requires of the user confusing operations. Therefore, a navigation device in which a destination of a user is set by a method in which the user and the navigation device exchange a dialogue with each other has been proposed (hereinafter, such navigation device is referred to as a first navigation device). To be more specific, the first navigation device refers to a speech recognition dictionary of a speech recognition engine in order to recognize an operation instructing speech given by the user, and prunes, based on speech recognition tree structure data, unnecessary portions of the speech. The first navigation device estimates the intention of the user based on un-pruned portion of the speech after in the speech recognition tree structure data, and outputs to the user a destination candidate. At this point, when there is a plurality of results based on the estimate, the first navigation device outputs to the user an audio question requesting the user to make a selection based on the plurality of results (for example, Japanese Laid-Open Patent Publication No. 2001-249685).

There has also been a proposal for a navigation device (hereinafter, referred to as a second navigation device in BACKGROUND ART section) which eliminates a need for setting a destination so that a user may immediately start driving to his/her destination. Generally, a conventional navigation device repeatedly extracts from map data a name of an administrative district, which is, at a given moment, beyond a predetermined distance from a vehicle having applied thereon the conventional navigation device, and repeatedly displays on a screen a directional name button having indicated thereto the extracted name of the administrative district. Further, when the user presses the displayed directional name button, the conventional navigation device sets a representative position of the administrative district indicated by the directional name button, which is pressed by the user, as a temporary destination. Then the conventional navigation device searches for a route to the temporary destination, and provides the user with guidance in accordance with the route (for example, Japanese Laid-Open Patent Publication No. 2002-122435).

### DISCLOSURE OF THE INVENTION

### PROBLEMS TO BE SOLVED BY THE INVENTION

Although the first navigation device exchanges a small dialogue with the user in order to set a destination as described above, in reality, it is difficult for the first navigation device to derive a specific destination based on such exchange of the small dialogue. Therefore, the exchange between the navigation device and the user may become long, and as a consequence, it becomes difficult for the user to start driving to a destination.

The second navigation device is structured such that a user may start driving to a destination as the second navigation device displays the directional name button. Also, the user may gradually approach his/her destination as the user presses a sequence of directional name buttons one at a time. However, the second navigation device requires the user to press the sequence of directional name buttons correctly until the user arrives at the destination, which is to say that the user needs to be aware of an effective route to the destination beforehand, otherwise the second navigation device is not able to provide the user with a shortest and quickest route to the destination. Furthermore, when the user needs guidance from the second navigation device in a place unfamiliar to the user, it is highly likely that the user chooses a wrong direction, thus the second navigation device is not operable to provide the user with appropriate guidance. As is clear from the above, the second navigation device is problematic in that the second navigation device may provide the user with inappropriate guidance.

Therefore, the object of the present invention is to offer a navigation device operable to allow a user to immediately start driving to his/her destination, and provide the user with guidance in accordance with an appropriate route to the destination.

### SOLUTION TO THE PROBLEM

In order to achieve the above-mentioned object, a first aspect of the present invention is directed to a navigation device, wherein the navigation device comprises an area input section for a user to input a name of an area which neighbors a destination of the user, a route searching section for searching for a route which leads the user to the area whose name is inputted in the area input section, a first guidance section for providing the user with guidance, in accordance with the route found in the route searching section, so as to guide the user to the area whose name is inputted in the area input section, a destination specifying section for specifying, by exchanging a dialogue with the user, the destination of the user after the guidance by the first guidance section starts, a route selecting section for selecting a route to the destination specified in the destination specifying section, and a second guidance section for providing the user with guidance so as to guide the user to the destination specified in the destination specifying section.

The destination specifying section preferably includes a question output section for generating and outputting a question to which the user responds by selecting only one of two options offered by the question, and a response input section for the user to input therein his/her response with respect to the question asked by the question output section. The destination specifying section specifies the destination in accordance with the response inputted by the user in the response input section.

The question output section preferably outputs to the user the question which is generated by the question output section preferably when a traveling speed of the user is below a predetermined value.

Also, preferably, the question outputted by the question output section, and the response inputted by the user into the response input section are in audio.

Also, preferably, when a destination is not specified, the destination specifying section sets, after deriving a current position of the user, a temporary destination based on the area whose name is inputted in the area input section and the current position. In such case, the route selecting section selects a route connecting the current position to the temporary destination which is set by the destination specifying section.

Also, when there is a plurality of representative positions pre-assigned to the area whose name is inputted in the area input section, the destination specifying section preferably selects a representative position nearest to the current position, which is derived by the destination specifying section, as a temporary destination.

When the route selecting section is able to execute a route selection, the destination specifying section preferably continues to update the temporary destination until the route selecting section is able to execute a route selection.

Also, when there is a plurality of representative positions pre-assigned to the area whose name is inputted in the area input section, the route searching section searches for a route for each of the representative positions which are set the area whose name is inputted in the area input section. The first guidance section provides the user with the guidance in accordance with each route found by the route searching section. The destination specifying section specifies one of the representative positions, which are set in the area whose name is inputted in the area input section, as the destination of the user. The route selecting section selects from among the plurality of routes found by the route searching section one route that leads the user to the destination specified by the destination specifying section.

Also, the destination specifying section includes a spot setting section for setting a spot, the spot is determined by backing up toward the user as much as a predetermined distance from an end spot of an overlapping portion between the plurality of routes found by the route searching section, a question output section for outputting to the user a question at the spot set by the spot setting section, and a response input section for the user to input his/her response to the question outputted by the question output section. The destination specifying section specifies the destination of the user in accordance with the response inputted in the response input section.

Also, a second aspect of the present invention is directed to a navigation method, wherein the navigation method comprises an area acquisition step for acquiring in accordance with an input inputted by a user a name of an area which neighbors a destination of the user, a route searching step for searching for a route which leads the user to the area whose name is inputted in the area acquisition step, a first guidance step for providing the user with guidance, in accordance with the route found in the route searching step, so as to guide the user to the area whose name is acquired in the area acquisition step, a destination specifying step for specifying, by exchanging a dialogue with the user, a destination of the user after the guidance by the first guidance step starts, a route selecting step for selecting a route to the destination which is specified in the destination specifying step, and a second guidance step for providing the user with guidance so as to guide the user to the destination specified in the destination specifying step.

Also, the third aspect of the present invention is directed to a computer program for providing the user with guidance so as to guide the user to his/her destination, wherein the computer program comprises an area acquisition step for acquiring, in accordance with an input inputted by a user, a name of an area which neighbors a destination of the user, a route searching step for searching for a route which leads the user to the area whose name is acquired in the area acquisition step, a first guidance step for providing the user with guidance, in accordance with the route found in the route searching step, so as to guide the user to the area whose name is acquired in the area acquisition step, a destination specifying step for specifying, by exchanging a dialogue with the user, a destination of the user after the guidance by the first guidance step starts, a route selecting step for selecting a route to the destination specified in the destination specifying step, and a second guidance step for providing the user with guidance, in accordance with the route selected in the route selecting step, so as to guide the user to the destination specified in the destination specifying step.

Also, the computer program is, as an exemplary case, stored in a recording medium.

### EFFECT OF THE INVENTION

According to each aspect of the present invention described above, the navigation device starts to provide a user, as soon as the user inputs an area, with guidance so as to guide the user to the area. Once the guidance, with which the navigation device guides the user toward the area, starts: the navigation device specifies a destination of the user by exchanging a dialogue with the user; selects a route which leads the user to the destination; and provides the user with the guidance in accordance with the selected route. Because the navigation device starts providing the user with the guidance as soon as the user inputs the area, the user is allowed to depart for the destination immediately. Further, because the navigation device specifies the destination and provides the user with the guidance so as to lead the user to the destination after the guidance to lead the user toward the area which neighbors the destination has started, the navigation device is operable to provide the user with the appropriate guidance in accordance with the route.

These and other objects, features, aspects and advantages of the present invention will become more apparent from the following detailed description of the present invention when taken in conjunction with the accompanying drawings.

### BRIEF DESCRIPTION OF THE DRAWINGS

[FIG. 1] FIG. 1 is a block diagram showing a functional configuration of a navigation device according to a first embodiment of the present invention.
[FIG. 2] FIG. 2 is a block diagram showing a configuration of a hardware platform for the navigation device shown in FIG. 1.
[FIG. 3] FIG. 3 is a diagram schematically showing a data structure of a placename database of a map storage section 2 shown in FIGS. 1 and 2.
[FIG. 4] FIG. 4 is a diagram schematically showing a data structure of a genre database of the map storage section 2 shown in FIGS. 1 and 2.
[FIG. 5] FIG. 5 is a diagram schematically showing a logical data structure of an example of substitution of map information which includes both databases shown in FIGS. 4 and 5.
[FIG. 6] FIG. 6 is a flowchart showing a procedure performed by the present navigation device.
[FIG. 7] FIG. 7 is a flowchart showing a detailed procedure performed in a step S105 shown in FIG. 6.
[FIG. 8] FIG. 8 is a flowchart showing a detailed procedure performed in a step S205 shown in FIG. 7.
[FIG. 9] FIG. 9 is a flowchart showing a detailed procedure performed in a step S209 shown in FIG. 7.
[FIG. 10] FIG. 10 is a flowchart showing a detailed procedure performed in a step S214 shown in FIG. 7.
[FIG. 11] FIG. 11 is a diagram schematically showing a temporary destination which is set in a step S506 shown in FIG. 10.
[FIG. 12] FIG. 12 is a flowchart showing a detailed procedure performed in a step S507 shown in FIG. 10.
[FIG. 13] FIG. 13 is a flowchart showing a detailed procedure performed in a step S508 shown in FIG. 10
[FIG. 14] FIG. 14 is a block diagram showing a functional configuration of a navigation device according to a second embodiment of the present invention.
[FIG. 15] FIG. 15 is a block diagram showing a configuration of a hardware platform for the navigation device shown in FIG. 14.
[FIG. 16] FIG. 16 is a main flowchart showing a procedure performed by an arithmetic processing section 7 shown in FIGS. 14 and 15.
[FIG. 17] FIG. 17 is a diagram schematically showing a content of procedure performed by the arithmetic processing section 7 shown in FIGS. 14 and 15.
[FIG. 18] FIG. 18 is a flowchart showing a detailed procedure performed in a step S805 shown in FIG. 16.
[FIG. 19] FIG. 19 is a flowchart showing a detailed procedure performed in a step S808 shown in FIG. 16.
[FIG. 20] FIG. 20 is a flowchart showing a detailed procedure performed in a step S812 shown in FIG. 16.

### DESCRIPTION OF THE REFERENCE CHARACTERS

- 1.: INFORMATION INPUT SECTION
- 2.: MAP STORAGE SECTION
- 3.: VEHICLE POSITION AND MOVEMENT DETECTION SECTION
- 4.: ARITHMETIC PROCESSING SECTION
- 41.: DESTINATION SPECIFYING SECTION
- 42.: ROUTE SEARCHING SECTION
- 43.: GUIDANCE INFORMATION GENERATING SECTION
- 5.: INFORMATION OUTPUT SECTION

### BEST MODE FOR CARRYING OUT THE INVENTION

### (First Embodiment)

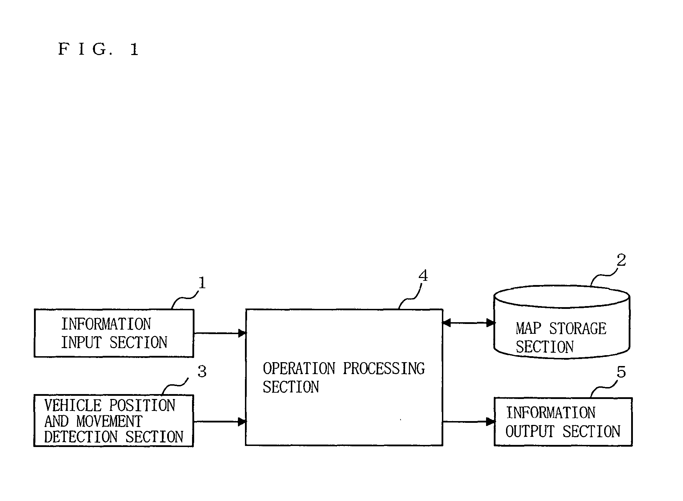

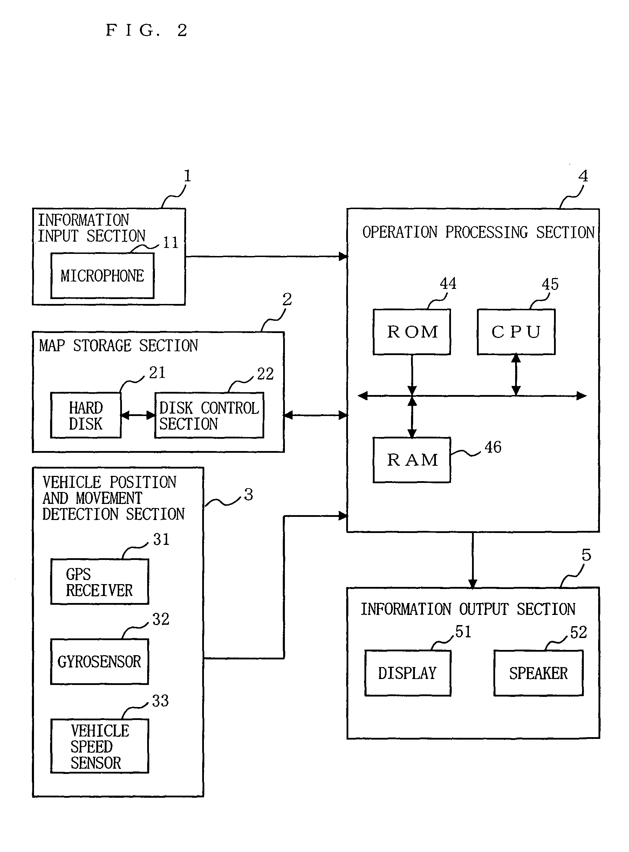

FIG. 1 is a block diagram showing a functional configuration of a navigation device according to a first embodiment of the present invention. Also, FIG. 2 is a block diagram showing a configuration of a hardware platform for a navigation device which is shown in FIG. 1. First, in FIGS. 1 and 2, the navigation device is mounted on a mobile unit, for example, a vehicle, a mobile telephone, or a PDA (Personal Digital Assistant). The navigation device comprises an information input section 1, a map storage section 2, a vehicle position and movement detection section 3, an arithmetic processing section 4, and an information output section 5.

The information input section 1 is to be operated by a user of the aforementioned mobile unit. The user inputs various type of information by operating the information input section 1. As one type of, such information, the user inputs information, concerning an area, needed for the present navigation device to execute following procedures. The information concerning the area may be inputted by the user, wherein the area has a predetermined size. In the present embodiment, the information input section 1 preferably includes a microphone 11 into which the user inputs information by speaking. Note that the information input section 1 may include, instead of the microphone 11, a keyboard on which the user inputs information by typing (the keyboard is not illustrated). Also, the information input section 1 may additionally include a button, which is assigned for a function of the present navigation device, and with which the user operates the navigation device by using his/her fingers.

The map storage section 2 stores map information. In the present embodiment the map storage section 2 generally includes a hard disk 21, and a disk control section 22. In the hard disk 21, at least map information, which is in a digital format, is stored. The disk control section 22 controls information, which is to be written on the hard disk 21 and to be read from the hard disk 21. Also, the map storage section 2 may include, instead of the hard disk 21, a recording medium (e.g., CD-ROM, DVD, or the like).

In the map information, which is stored in the map storage section 2, the following databases, which are described below, and data for commonly known map information may be included.

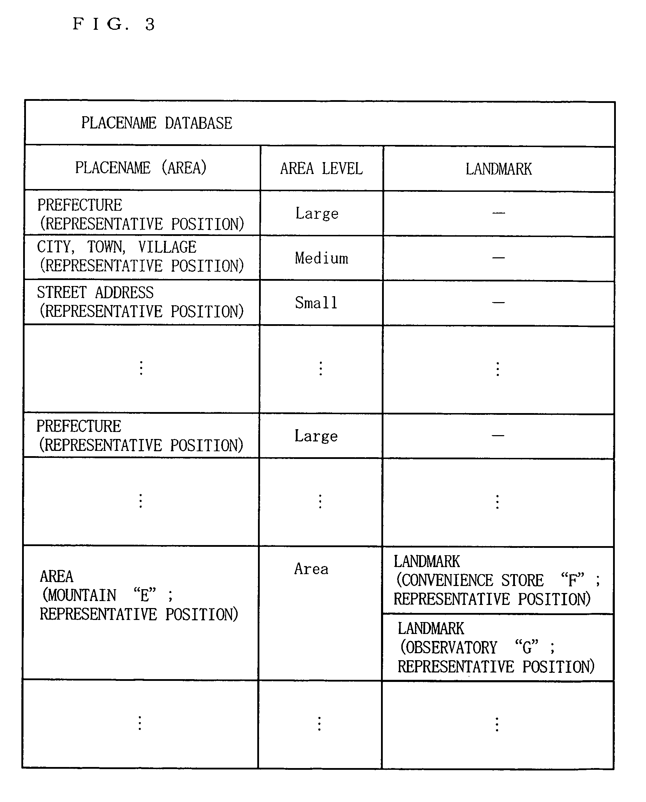

FIG. 3 is a diagram schematically showing an example of a data structure of a placename database (hereinafter, referred to as a placename DB) included in the map information. In FIG. 3, the placename DB includes a plurality of first information sets each including at least a placename, an area level and landmark data. A placename refers to a name for an area, which potentially signifies a plurality of points (described below) : a relatively large administrative section such as a prefecture (e.g., prefecture "A") ; a small administrative section such as a city, a town, or a village (e.g., town "C" in city "B") ; a street address (e.g., house number "N" on street "M"); and other areal sections (hereinafter, referred to as a fourth areal category). Each area is provided with a point (hereinafter, referred to as a representative point), which represents the area, and representative position information (e.g., a combination of latitude coordinates and longitude coordinates), which may be utilized by the present navigation device. The fourth areal category refers to a relatively large area, for example, lake "D" or mountain "E", which may not be described in terms of an administrative section, and may not be represented by single representative position information.

Also, the placename DB is structured such that an inclusion relation may be specified among a large administrative section, a small administrative section and a street address. To be more specific, a first information set, which is generated for a small administrative section, which is included in a large administrative section, is stored in an area which is logically related to a first information set which is generated for the large administrative area (according to an example shown in FIG. 3, a plurality of stored areas are logically linked to one another). Also, a first information set which is generated for a street address included in a small administrative section is stored in an area (according to the example shown in FIG. 3, a plurality of stored areas are logically linked to one another) which is logically related to a first information set which is generated for the small administrative section.

The area level refers to information which indicates a size level for a place which is indicated by a placename (area) which is included in a first information set. In the present embodiment, as an exemplary case, a large administrative section is assigned with an area level "Large" to indicate that the large administrative section is larger than a small administrative section. An area level "Medium" is assigned to a small administrative section to indicate that the small administrative section is smaller than the large administrative section. Also, for a street address, an area level "Small" is assigned to indicate that the street address is smaller than the small administrative section. Further, an area level "Area" is assigned to the fourth areal category because of a large proportion of an area which is indicated by the fourth areal category as described above, and also because the fourth areal category does not belong to any of the large administrative section, small administrative section, or the street address.

The landmark data is a piece of data for indicating a name of a landmark, which is located in a fourth areal category, or representative position of the landmark. For example, suppose that in the mountain "E" in a fourth areal category, there are a convenience store "F" and an observatory "G". Under such circumstance, a first information set includes the fourth areal category "Area", a name of the convenience store "F" and representative position information (as landmark data) ; and the fourth areal category "Area", a name of the observatory "G" and representative position information.

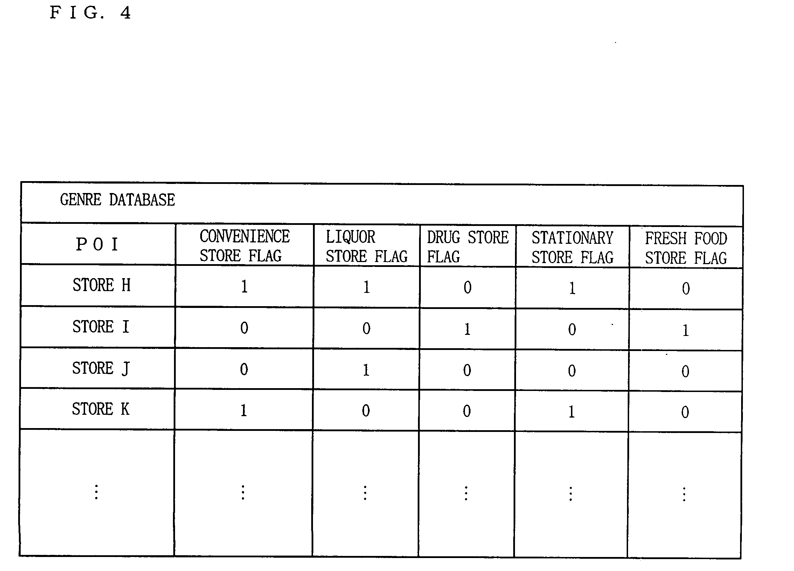

Also, FIG. 4 is a diagram schematically showing an example of a data structure of a genre database (hereinafter, referred to as a genre DB), which is included in the map information. In FIG. 4, the genre DB includes a plurality of second information sets each including a POI (Point Of Interest), and a predetermined number of genre flag (according to FIG. 4, an example in which 5 genre flags are used is shown). In the present embodiment, the POI means a name of a single point indicated by a representative point, and is different from the placename (area) described above. In FIG. 4, a store "H", a store "I", a store "J" and a store "K" are shown as POIs.

The aforementioned genre flag refers to a piece of information which indicates to what genre a point, which is included in a second information set, belongs. An example shown in FIG. 4 shows a convenience store flag to indicate whether or not a target point is a convenience store, a liquor store flag to indicate whether or not a target point is a liquor store, a drug store flag to indicate whether or not a target point is a drug store, a stationary store flag to indicate whether or not a target point is a stationary store, and a fresh food store flag to indicate whether or not a target point is a fresh food store. Also, in the example in FIG. 4, "1" is a value assigned to indicate an affirmative response.

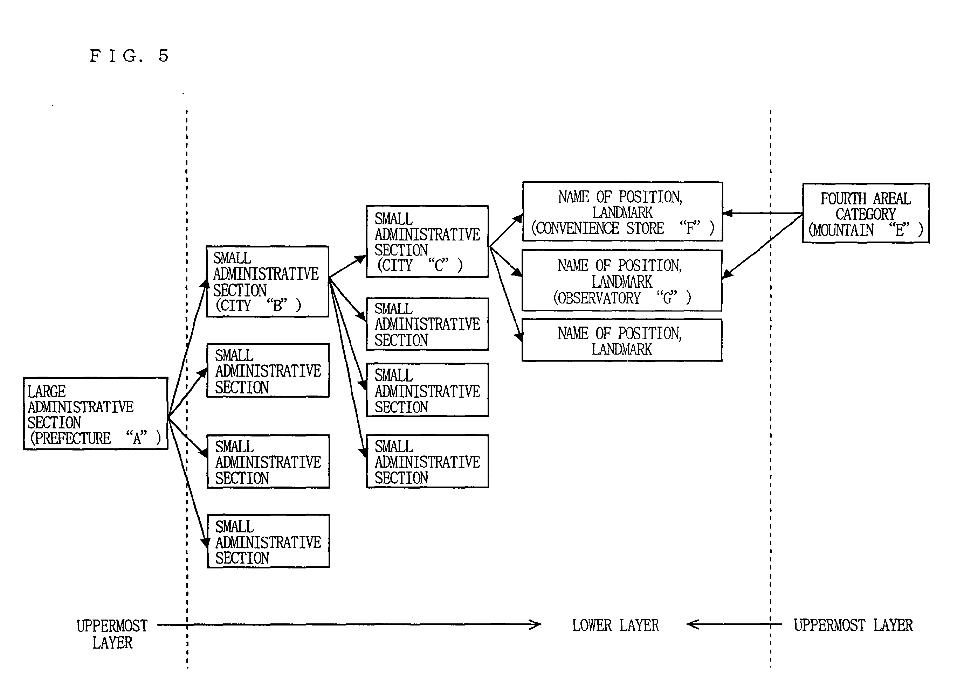

FIG. 5 is a diagram schematically showing a logical data structure of an example of substitution of map information which includes both databases, which are described above. According to map information shown in FIG. 5, names are linked in a logical order, wherein names of a large administrative section (e.g., prefecture "A"), or a fourth areal category (e.g., mountain "E") are classified at an uppermost layer, and names of a small administrative section (e.g., city "B"), a small administrative section (e.g., town "C"), a POI or a landmark (store "H" or observatory "G", for example) are respectively classified at lower layers.

Referring back to FIGS. 1 and 2, the vehicle position and movement detection section 3, which detects a current position and/or a movement of a vehicle, includes, as an exemplary case, a GPS receiver 31, a gyrosensor 32 and a vehicle speed sensor 33. The GPS receiver 31 calculates based on information received from an artificial satellite, which is a component of a GPS (Global Positioning System), an absolute position of a vehicle on globe, and outputs the absolute position to the arithmetic processing section 4. The gyrosensor 32 is affixed in a vehicle, detects a direction to which the vehicle is moving, and outputs the direction to the arithmetic processing section 4. The vehicle speed sensor 33 is affixed in the vehicle, detects a speed of the moving vehicle, and outputs the speed to the arithmetic processing section 4. In an example shown in FIG. 2, the navigation device adopts both a radio navigation method and an autonomous navigation method (namely, a hybrid navigation method), but only either one of the radio navigation method or the autonomous navigation method may be adopted. Also, the vehicle position and movement detection section 3 may include, instead of the GPS receiver 31, a receiver (for example, a GALILEO or a GLONASS receiver) so as to realize another radio navigation method.

The arithmetic processing section 4 executes a destination specifying process, which is unique to this embodiment. To be more specific, when the user inputs, by using the information input section 1, an area which includes his/her destination, first, the arithmetic processing section 4 searches for a route to the inputted area, starts providing the user with guidance in accordance with the route found by the search, generates questionnaire data so as to ask the user a question regarding the destination, and causes the information output section 5 to ask the question. The user inputs his/her response, by using the information input section 1, to the question asked by the information output section 5. The information input section 1 generates response data which indicates the inputted response, and outputs the response data to the arithmetic processing section 4. The arithmetic processing section 4 attempts to specify based on the response data acquired from the information input section 1 the destination (namely, a point described above). The arithmetic processing section 4 executes such sequence of processes at least once in order to specify the destination. In other words, the present navigation device specifies the destination by exchanging a dialogue with the user.

The arithmetic processing section 4 searches for a route which connects a starting point of a vehicle to a destination, or to a temporary destination (which will be described later) by using map information, which is stored in the map storage section 2. A commonly known method such as Dij kstra method is to be used as an algorithm for the search for a route. As for the starting point of the vehicle, the arithmetic processing section 4 may use information which is inputted by the user by using the information input section 1, or use a current position which is calculated by the hybrid navigation method.

The arithmetic processing section 4 generates guidance information which is required when providing the user, of the vehicle, with guidance so as to lead the user to the destination in accordance with the route found by the search. Commonly known information is used to generate the guidance information. Here, the guidance information will be described into details. On the route to the destination, there may exist a turning point at which the vehicle must turn left or right. The guidance information, in general, includes a piece of audio data containing a speech which says to the user "Please turn right at a corner -- meters ahead" which is to be announced at points 700 meters, 300 meters, 100 meters and 10 meters before the turning point. The guide information preferably includes landmark information concerning an area near the turning point. By including in the guide information the landmark information concerning the turning point, it becomes possible for the navigation device to provide the user with guidance which is more easily understood.

In the present embodiment, the aforementioned arithmetic processing section 4 includes, as shown in FIG. 2, a ROM 44, a CPU 45, and a RAM 46. The ROM 4 4 stores a computer program in which an operation sequence of the CPU 45 is defined. The CPU 45 executes processes in accordance with the computer program stored in the ROM 44. The RAM 46 is used as a workspace for the CPU 45.

The information output section 5 outputs audio guidance and/or image guidance in accordance with data or information generated by the arithmetic processing section 4. For clarity of description of the present embodiment, the information output section 5 includes, as shown in FIG. 2, a display 51 for displaying images, and a speaker 52 for outputting speech. The navigation device may include only one of either the display 51 and the speaker 52.

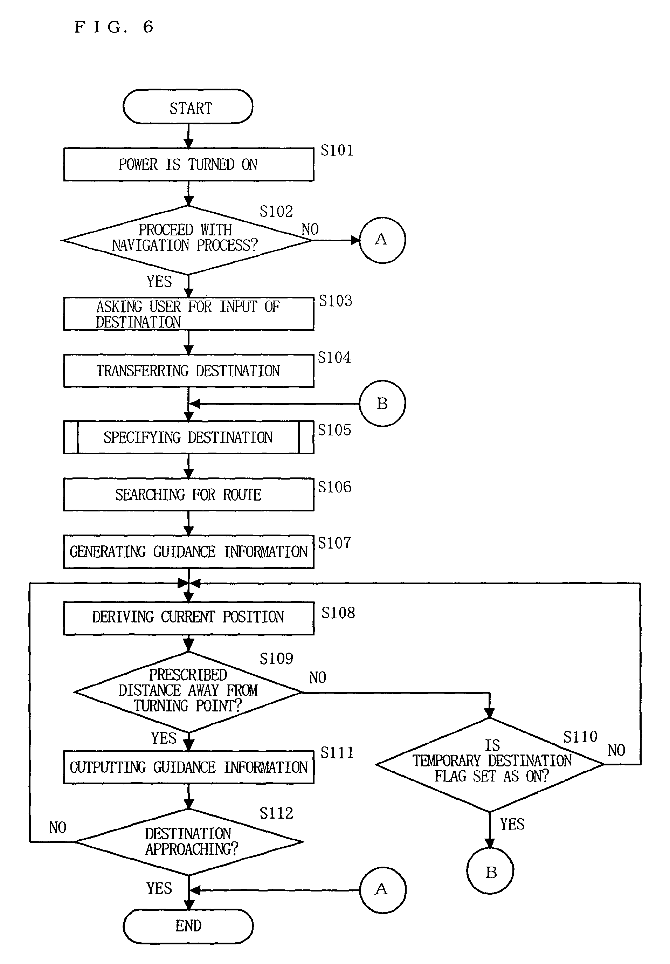

Next, a process performed by the present navigation device will be described into detail. FIG. 6 is a flowchart showing a procedure performed by the present navigation device. In FIG. 6, power is turned on for the navigation device (step S101) . Note that in the present embodiment, if the navigation device is utilized for a vehicle, the navigation device is turned on preferably when an accessory power of the vehicle is turned on.

After the power of the navigation device is turned on, the arithmetic processing section 4 (namely, the CPU 45) determines whether or not to proceed with a navigation process (step S102). To be more specific, the arithmetic processing section 4 causes the information output section 5 to ask the user, by outputting a speech or an image, whether or not the user wishes to use the present navigation device. To be more specific, a speech or an image which asks the user "Would you like guidance to your destination?" is outputted. When the user inputs his/her response, the information input section 1 outputs to the arithmetic processing section 4 an electric signal (hereinafter, referred to as a response signal) indicating the response. When the response signal received from the information input section 1 indicates "No", the arithmetic processing section 4 determines, in the step S102, not to proceed with the procedure shown in FIG. 5, and ends the procedure. On the other hand, when the response signal indicates "Yes", the arithmetic processing section 4 causes the information output section 5 to output a speech or an image to ask the user for an input of his/her destination (step S103). To be more specific, the information output section 5 outputs a speech or an image which says "Please input your destination". Here, since it is conceivable that the user has already started driving after the step S101, a preferable speech or image says to the user "Please voice input your destination", in the step S103.

After the user is asked to input his/her destination in the step S103, the user operates the information input section 1 to input the destination. As for the destination, either a point described above, or an area described above may be inputted. The information input section 1 transfers the inputted destination to the RAM 46 of the arithmetic processing section 4 (see FIG. 2) (step S104). When the voice input is requested in the step S103 for the user to input the destination, in the step S104, the microphone 11 (see FIG. 2) picks up an audio response, which states the destination, from the user, converts the speech into data indicating the speech, and outputs the data to the arithmetic processing section 4. With a combination of the steps S103 and S104, the user is allowed to input his/her destination without taking his/her hands off a steering wheel of the vehicle. Also, when a manual input is requested in the step S103 for the user to input the destination, the information input section 1 outputs to the arithmetic processing section 4 a digital signal which indicates the manually inputted destination.

After the step S104, the arithmetic processing section 4 executes a destination specifying process (step S105).

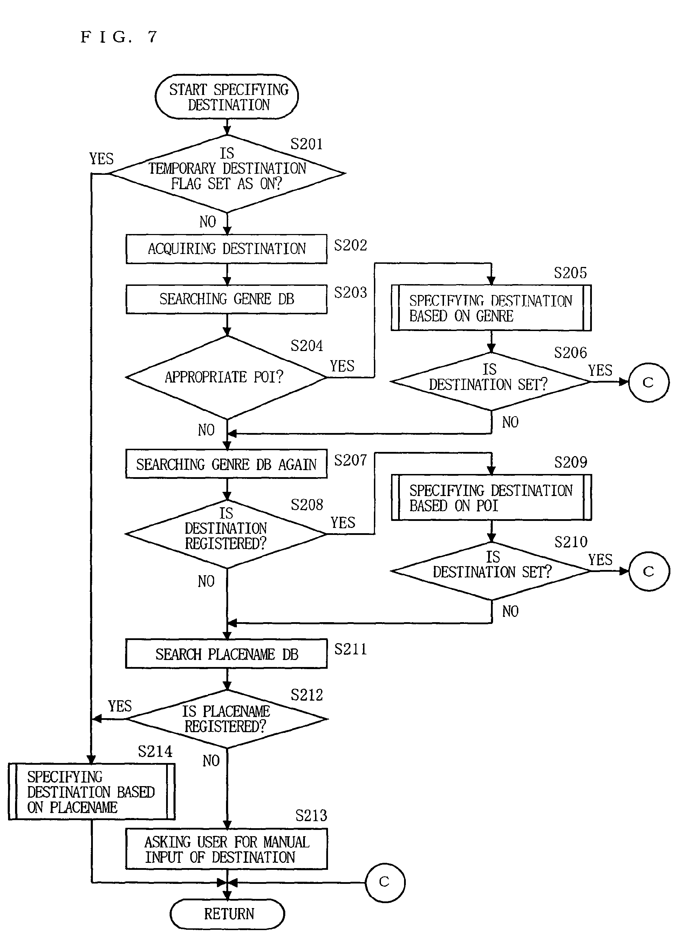

FIG. 7 is a flowchart showing a detailed procedure performed in the step S105. In FIG. 7, the arithmetic processing section 4 determines whether or not a temporary destination flag is set as ON (step S201). The temporary destination flag is automatically set as OFF by the arithmetic processing section 4 after the power of the navigation device is turned ON. A detail concerning the temporary destination flag, and a process, which will be performed after the arithmetic processing section 4 determines in a step S201 that the temporary destination flag is set as ON, will be described below.

If the step S201 is to be performed for a first time after the power of the navigation device is turned ON, the arithmetic processing section 4 determines "No" in the step S201, and acquires the destination which has been transferred to the RAM 46 (step S202). When the destination is voice inputted via the microphone 11, and transferred to RAM 46, digital audio signal is, in general, stored in the RAM 46. Since the digital audio signal is not applicable in search procedures to be performed later by the navigation device, the CPU 45 converts the digital audio data to text data (character data) which indicates the destination.

After the step S202, the arithmetic processing section 4 searches a genre DB (see FIG. 4) (step S203). To be more specific, the arithmetic processing section 4 determines, based on genre flags in the genre DB, whether or not a POI, which matches a genre of the acquired destination, exists in the genre DB (step S204). In other words, the arithmetic processing section 4 determines whether or not a POI whose genre flag is set as 1 is registered in the genre DB, the genre of the POI matches the genre of the destination. Hereinafter a specific example will be given. Suppose that the current destination is a "convenience store". Under such circumstance, the arithmetic processing section 4 determines whether or not there is a convenience store flag whose value is set as 1. The step S204 is executed in a similar manner regardless of a genre of destination.

When it is determined "Yes" in the step S204, the arithmetic processing section 4 executes a specifying process of the destination based on the genre of the destination (step S205). To be more specific, in the step S205, the arithmetic processing section 4 attempts to, by using the acquired destination, specify, in accordance with genre flags in the genre DB, a destination which will be required in processes to be performed later.

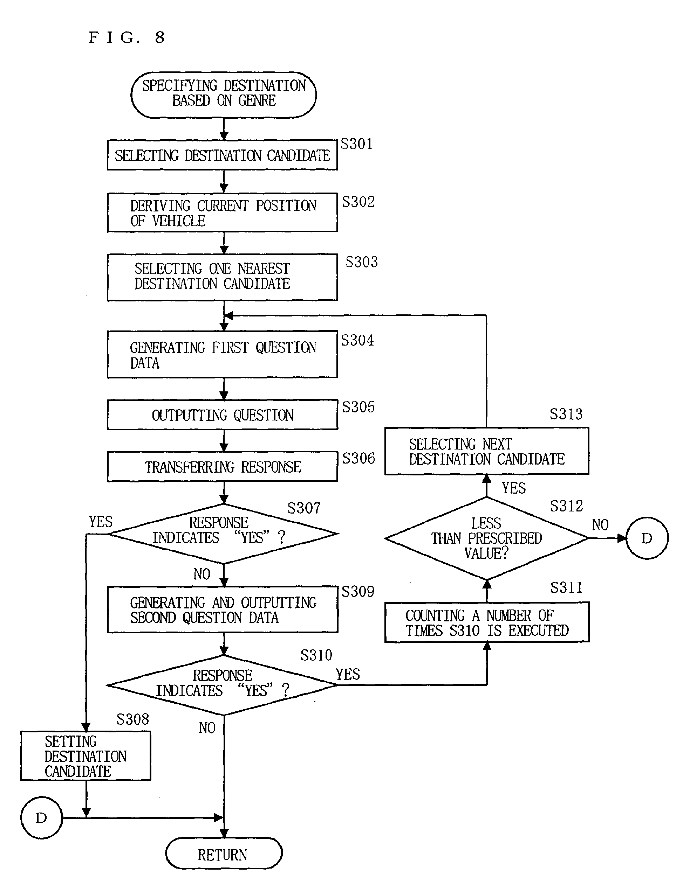

FIG, 8 is a flowchart showing a detailed procedure performed in the step S205. In FIG. 8, the arithmetic processing section 4 selects, as destination candidates, all POIs whose genre flags are set as 1, wherein each genre flag matches the genre of the destination (step S301). The genre flags used here are same genre flags used in the step S204.

Then, the arithmetic processing section 4 derives a current position of the vehicle based on information outputted from the vehicle position and movement detection section 3 (step S302).

Then, the arithmetic processing section 4 selects a destination candidate, which is selected in the step S302 and is nearest to the current position of the vehicle from all the destination candidates selected in the step S301 (step S303). The arithmetic processing section 4 preferably selects in the step S303 a destination candidate, which is located on a side, of a road, on which the vehicle is traveling.

Then, the arithmetic processing section 4 generates audio data or image data (hereinafter, the both data will be referred to as first question data) which contains a question asking the user "Would you like a route search based on the destination candidate?" so as to confirm whether or not the destination candidate selected in the step S303 should be used in processes which will be performed later (step S304). Since the user may already be driving, as a safety precaution, it is preferable that the first question data generated in the step S304 contains a question asking the user "Please voice input whether you would like a route search based on the destination candidate (POI)". By this, the user is allowed to respond to the question while his/her hands are on the steering wheel of the vehicle. The arithmetic processing section 4 generates aforementioned first question data by inserting a portion concerning a POI required for the question into natural speech phrases and image data, which are pre-stored in the map storage section 2.

The information output section 5 receives aforementioned question data, and outputs the speech or the image which indicates the content of the question data (step S305). By this, the present navigation device requests the user for his/her response. The user inputs his/her response to the question by operating the information input section 1. The information input section 1 transfers the inputted response to the arithmetic processing section 4 (step S306). When a voice input is requested in the step S305, the microphone 11 (see FIG. 2) of the information input section 1 picks up an audio response of the user in the step S306, converts the audio response to digital signal, and outputs the digital signal to the arithmetic processing section 4. With a combination of the steps S305 and S306, the user is allowed to input his/her response while his/her hands are on the steering wheel of the vehicle. Also, when a manual input of the response is requested, the information input section 1 outputs to the arithmetic processing section 4 a digital signal which indicates the manually inputted response.

The arithmetic processing section 4 determines whether or not the response received from the information input section 1 indicates "Yes" (step S307). When the response indicates "Yes", the arithmetic processing section 4 sets the destination candidate selected in the step S303 as a destination so as to search for a route to the destination (step S308). Then the arithmetic processing section 4 ends the procedure shown in FIG. 8.

When the response indicates "No" in the step S307, the arithmetic processing section 4 generates audio data or image data (hereinafter, the both data will be referred to as second question data) which contains a question asking the user "Would you like a genre-based destination specifying process to continue?" so as to confirm whether or not the user wishes the navigation device to continue with the ongoing genre-based destination specifying process, and causes the information output section 5 to output the second question data (step S309). Again, as a safety precaution, it is preferable if the second question data contains a question asking the user "Please voice input whether you would like a genre-based destination specifying process to continue". Since it is highly conceivable that the user may find it annoying if the step S309 is repeated many times, the process shown in FIG. 8 may be described in the computer program, which is stored in the ROM 44, such that the step S309 is to be executed only once.

After the step S309, the user inputs his/her response to the question by operating the information input section 1. The information input section 1 transfers the inputted response to the arithmetic processing section 4. As described above, in order to input the response, the user may input his/her response by speaking to the microphone 11, or manually. The arithmetic processing section 4 determines whether or not the response received from the information input section 1 indicates "Yes" (step S310). When the response indicates "No", the arithmetic processing section 4 ends the procedure shown in FIG. 8 in order to end the genre-based destination specifying process.

On the other hand, when the response indicates "Yes", the arithmetic processing section 4 counts a number of times the step S305 is executed (step S311), then determines whether or not the number of times the step S305 is executed is equal to or smaller than a predetermined value (step S312). When it is determined "No", which means that the genre-based destination specifying process is unable to specify the destination, in the step S312, the arithmetic processing section 4 ends the procedure shown in FIG. 8. Due to a repetition of the genre-based destination specifying processes, the present navigation device is able to prevent a destination candidate, which is too far, from being selected, and an operation which the user may find annoying.

On the other hand, when it is determined "Yes" in the step S312, the arithmetic processing section 4 selects from the destination candidates selected in the step S301 a destination candidate which is yet to be selected (step S313). Also in the step S313, as in the step S303, the arithmetic processing section 4 preferably selects a destination candidate, which is located on a side, of a road, on which the vehicle is traveling. Although, in the step S313, one destination candidate is selected based on a distance between the vehicle and the destination candidate, the selection method is not limited thereto; the arithmetic processing section 4 may request the user, in a same manner as described above, for an input of a keyword concerning his/her destination, and, in accordance with the inputted keyword, select from the destination candidates selected in the step S301 a destination candidate which is yet to be selected.

The arithmetic processing section 4 executes the following steps so as to confirm whether or not the destination candidate selected in the step S313 should be used in processes to be performed later.

After the above-described procedure shown in FIG. 8 ends, the arithmetic processing section 4 determines whether or not a destination has been set by the genre-based destination specifying process (step S205) (FIG. 7; step S206). When it is determined "Yes", the arithmetic processing section 4 ends the procedure shown in FIG. 7

On the other hand, when it is determined "No", the arithmetic processing section 4 searches the genre DB (see FIG. 4) (step S207), and determines whether or not the acquired destination is registered in the genre DB as a POI (step S208). Hereinafter, a specific example will be given. Suppose that the current destination acquired in the step S202 is a store "H". Under such circumstance, whether or not the genre DB contains any registered POI at all is determined. Note that the step S207 is executed even if the arithmetic processing section 4 determines "No" in the step S204. Also, a step S208 is to be executed in a same manner regardless of a genre of destination.

When it is determined "Yes" in the step S208, the arithmetic processing section 4 executes a destination specifying process based on POIs (step S209). To be more specific, in the step S209, the arithmetic processing section 4 attempts to, by using POI in the genre DB, specify based on the acquired destination a destination to which a route is searched for.

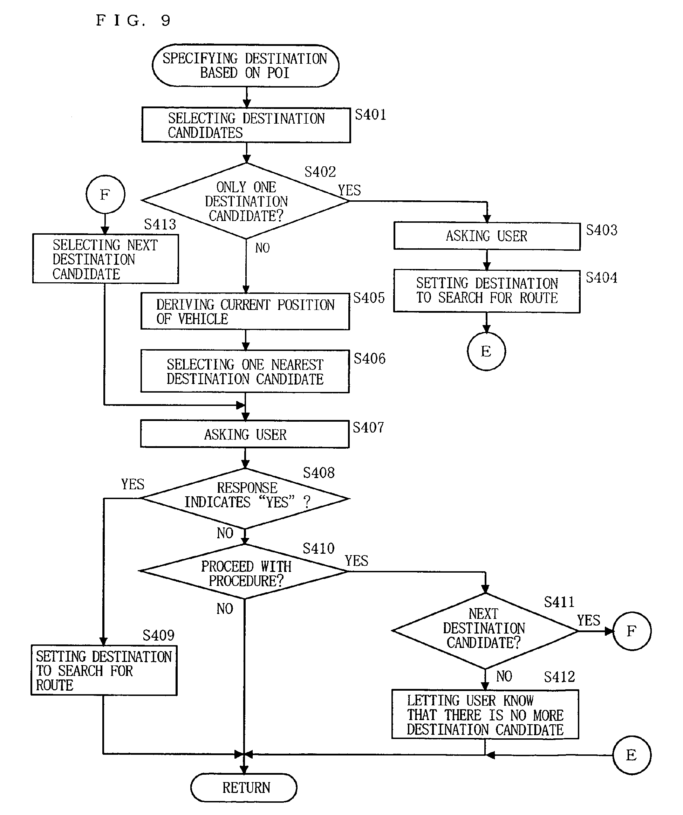

FIG. 9 is a flowchart showing a detailed procedure performed in the step S209. In FIG. 9, the arithmetic processing section 4 selects, as destination candidates, all POIs found in the step S207 from the genre DB (step S401).

Then the arithmetic processing section 4 determines whether or not one destination candidate is selected in the step S401 (step S402). When it is determined "Yes", the arithmetic processing section 4 asks the user whether or not the single destination candidate selected in the step S401 should be used in processes to be performed later (step S403). Note that the arithmetic processing section 4 asks the question in a same manner as the question which is asked in the aforementioned steps S304 and S305, but the question will have a content different from those in the steps S304 and S305. An example of the question outputted by the arithmetic processing section 4 will be, in audio, "Would you like to set store "H" as your destination of the route search?".

Then the arithmetic processing section 4 sets the destination candidate as the destination for the route search (step S404). Then the arithmetic processing section 4 ends the procedure shown in FIG. 9.

When the arithmetic processing section 4 determines that more than one destination candidates are selected in the step S402, the arithmetic processing section 4 derives a current position of the vehicle based on information outputted from the vehicle position and movement detection section 3 (step S405).

Then, the arithmetic processing section 4 selects a destination candidate nearest to the current position of the vehicle from all the destination candidates selected in the step S401 (step S406). Again, as a safety precaution, the arithmetic processing section 4 preferably selects a destination candidate, which is located on a side, of a road, on which the vehicle is traveling.

Then, the arithmetic processing section 4 generates, in a same manner as in the step S304, a first question data which includes information concerning the destination candidate selected in the step S406, and causes the information output section 5 to output the first question data. By using the first question data, the arithmetic processing section 4 asks the user whether or not the user wishes the destination candidate, selected in the step S406, to be used in processes which will be performed later (step S407). An example of the question outputted by the arithmetic processing section 4 will be, in audio, "Are you sure a convenience store "F" in town "C" is your destination?".

The arithmetic processing section 4 determines, in a same procedure as described above, whether or not a response the user inputted via the information input section 1 indicates "Yes" (step S408). When the arithmetic processing section 4 determines that the response indicates "Yes", the arithmetic processing section 4 sets the destination candidate as the destination (step S406). Then the arithmetic processing section 4 ends the procedure shown in FIG. 9.

When the arithmetic processing section 4 determines that the response indicates "No", the arithmetic processing section 4 determines whether or not the user wishes the navigation device to continue with the ongoing POI-based destination specifying process (step S410). The process for the current step is performed in a same manner as in the aforementioned steps S309 through S310. When it is determined "No" in the step 410, arithmetic processing section 4 ends the procedure shown in FIG. 9 so as to end the ongoing POI-based destination specifying process.

On the other hand, when it is determined "Yes" in the step S410, the arithmetic processing section 4 determines whether or not there is any destination candidate, among the destination candidates selected in the step S401, which is yet to be presented to the user (step S411). When it is determined "No" in the step S411, the arithmetic processing section 4 communicates to the user that there is no destination candidate (step S412), and then, ends the procedure shown in FIG. 9 so as to end the ongoing POI-based destination specifying process. In the step S412, the arithmetic processing section 4 may communicate to the user by requesting "Please use the displayed map to manually input your destination".

On the other hand, when it is determined "Yes" in the step S411, the arithmetic processing section 4 selects among the candidates yet to be presented to the user, a destination candidate nearest to a current position of the vehicle as a destination candidate (step S413). After the step S413, processes following the step S407 are to be executed.

After the process shown in FIG. 9 ends, the arithmetic processing section 4 determines whether or not the POI-based destination specifying process, as described above in the step S209, was able to specify a destination (FIG. 7; step S210). When it is determined "Yes", the arithmetic processing section 4 ends the procedure shown in FIG. 7.

As described above, according to the POI-based destination specifying process, destination candidates are presented, after the step S405, to the user one by one starting from a destination candidate nearest to a current position of the vehicle (that is, a destination candidate most likely, compared with other destination candidates, to be reached by the vehicle) . Therefore, the present navigation device is able to specify a destination, which is used for a route search, while a number of times the user is asked questions is reduced. By this, the present navigation device is able to reduce for the user a burden of having to respond to many questions.

When there is a plurality of POIs, the arithmetic processing section 4 may ask the user to input an address as detailed as possible of the destination so as to use the inputted address in a placename-based destination specifying process which will be executed later.

Also, when it is determined "No" in the step S210, the arithmetic processing section 4 searches the placename DB (see FIG. 3) (step S211) so as to determine whether or not the destination acquired in the aforementioned step S202 is a registered placename (area) (step S212). When it is determined "No", which means that the procedure shown in FIG. 7 is unable to specify a destination, in the step S212, the arithmetic processing section 4 communicates via the information output section 5 to the user "Please use the displayed map to manually input your destination" (step S213). As for a process performed in the step S213, a commonly known skill is to be used.

On the other hand, when it is determined "Yes" in the step S212, the arithmetic processing section 4 executes a placename-based destination specifying process (step S214). To be more specific, in the step S214, the arithmetic processing section 4 attempts to specify by using the placename DB a destination to which a route is searched for.

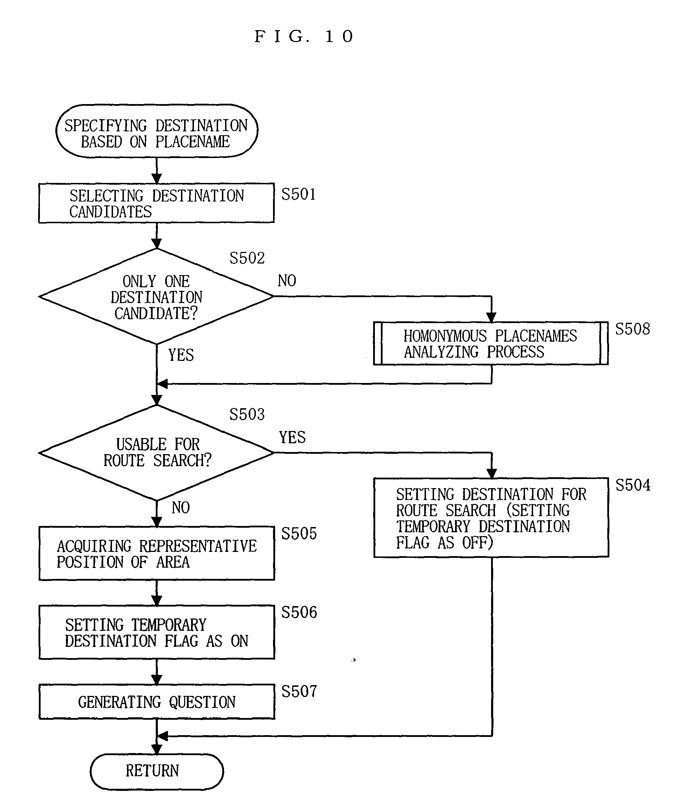

FIG. 10 is a flowchart showing a detailed procedure performed in the step S214. In FIG. 10, the arithmetic processing section 4 selects, as destination candidates, all placenames found by the search in the step S211 (step S501).

Then the arithmetic processing section 4 determines whether or not one destination candidate is selected in the step S501 (step S502). As described above, the user may input his/her destination by using the microphone 11. Therefore, all places, which have a same name phonetically but are transcribed differently from one another (e.g., placenames that sound the same by written with different Kanji (Chinese character)), are to be selected in the step S501. On the other hand, when the destination is manually inputted via the keyboard (not illustrated), places, which have different names phonetically from one another but are transcribed by using same Kanji, can possibly be selected in the step S501.

For clarity of description, it is supposed that one destination candidate is selected in the step S502. Under the circumstance in which one destination candidate is selected in the step S502, the arithmetic processing section 4 determines whether or not the selected destination candidate may be used as a point to which a route is searched for (step S503). In general, a destination needs to be a point for the navigation device to search for a route. However, the user may input, while the steps S103 and S104 are being executed, his/her destination as he/she wishes, and the inputted destination may not necessarily be a point to which the navigation device is capable of finding a route to. For example, if the user inputs Mountain "E" as his/her destination, since an area which is referred to as a mountain, in general, is so large that the navigation device is not capable of setting the mountain as a destination, let alone finding a route to it.

For this reason, in the present embodiment, the determination is made in the step S503 based on whether or not a selected destination candidate matches a landmark that is registered in the placename DB. When a selected destination candidate is a registered landmark, the arithmetic processing section 4 determines "Yes" in the step S053 since the landmark is, in the placename DB (see FIG. 3), assigned with a piece of data which indicates a representative position of the landmark. Then the arithmetic processing section 4 sets the selected destination candidate as a destination to which a route is searched for, and, if a temporary destination flag is set as ON, turns it Off (step S504). Then, the arithmetic processing section 4 ends the procedure shown in FIG. 10.

When the arithmetic processing section determines "No" in the step S503, it means that the selected destination candidate is registered in the placename DB as a large administrative section, a small administrative section, or as a fourth areal category.

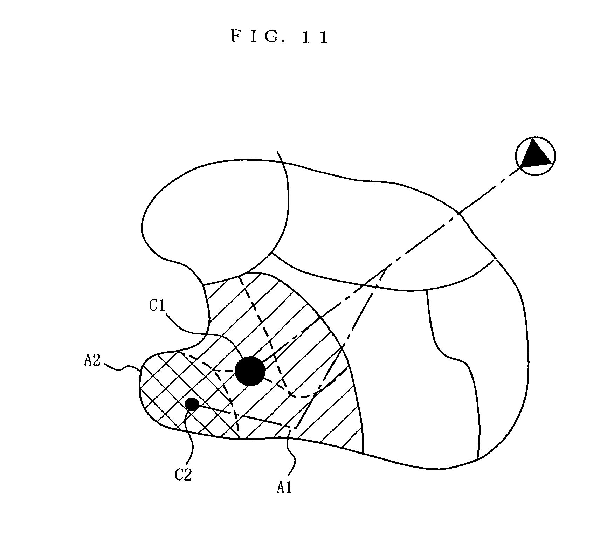

The arithmetic processing section 4 acquires from the placename DB a representative position of an area (a large administrative section, a small administrative section, or a fourth areal category) which matches the selected destination candidate (step S505). When a representative point of an area is not pre-assigned in the placename DB, the arithmetic processing section 4 may derive the representative point by calculation in the step S505. For example, as shown in FIG. 11, when an area A1, which matches the selected destination candidate, is specified, the arithmetic processing section 4 derives a C1, which is a center point (latitude and longitude wise) of the area A1, and uses the C1 as a representative point of the area A1. Note that a landmark (e.g., a prefectural office, a city office, or a welknown public facility) which represents an area matching the selected destination candidate may be acquired in the step S505 as a representative point of the area.

Then, the arithmetic processing section 4 sets the representative position, which is acquired as described above, as a temporary destination, and sets a temporary destination flag as ON (step S506).

Then, the arithmetic processing section 4 executes a question generating process in order to reduce all the possible points to one point (step S507).

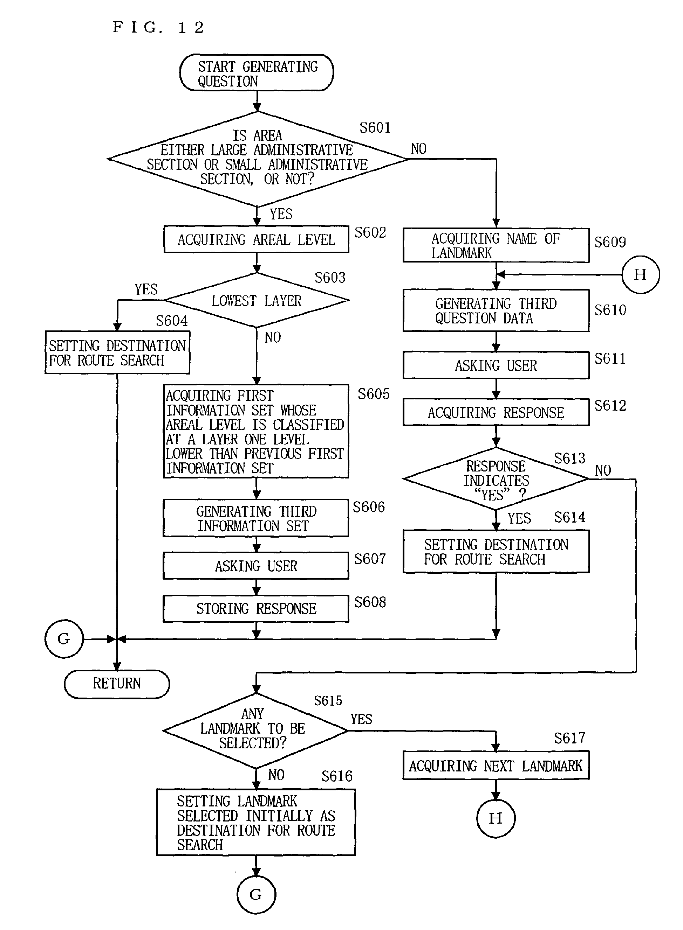

FIG. 12 is a flowchart showing a detailed procedure performed in the step S507. In FIG. 12, the arithmetic processing section 4 determines whether the area, which matches the destination candidate, is either a large administrative section or a small administrative section, or not (step S601). When it is determined "Yes" in the step S601, the arithmetic processing section 4 acquires an area level from a first information set (that is, a first information set including a name for either a large administrative section, or a small administrative section) for the area (step S602).

Then, the arithmetic processing section 4 determines whether or not the acquired area level is classified at a lowest layer (step S603). When it is determined "Yes", which means that the area matching the selected destination candidate has been narrowed down to a point to which a route may be searched for, in the step S603, the arithmetic processing section 4 sets the area matching the selected destination candidate as a destination to which a route is searched for (step S604) . Then the arithmetic processing section 4 ends the procedure shown in FIG. 12.

When it is determined "No", which means that the area matching the destination candidate has not been narrowed down to a point to which a route may be searched for, in the step S603, the arithmetic processing section 4 selects a first information set, which is classified at a layer one level lower than the previous first information set, and is yet to be selected. Then the arithmetic processing section 4 stores the selected first information set (step S605).

Then the arithmetic processing section 4 generates audio data or image data (hereinafter, the both data will be referred to as third question data) which contains a question asking the user "Are you sure that city "B" in prefecture "A" is your destination?" so as to assure a name of the area (a small administrative section or a street address) which is specified in the first information set selected in the step S605 (step S606) . Again, as a safety precaution, it is preferable if the third question data requests an audio input for a response.

The information output section 5 outputs to the user the audio data or the image data indicating the third question data (namely the question), which is generated as described above (step S607).

The user inputs his/her response, preferably in audio, to the question by operating the information input section 1. The information input section 1 transfers the inputted response to the arithmetic processing section 4, in which the inputted response is stored (step S608).

When it is determined "No" in the step S601, the arithmetic processing section 4 acquires a name of one landmark from a first information set (that is, a first information section generated for the fourth areal category) for the area (step S609).

Then, the arithmetic processing section 4 generates aforementioned third question data so as to assure, by asking the user, whether or not the name of the landmark is to be used as a destination to which a route is searched for (step S610). In the step S610, the third question data is a piece of audio data which contains a question asking the user, for example, "Are you sure that observatory "G" (an example for a landmark) in mountain "E" (an example for a fourth areal category) is your destination?".

The information output section 5 asks, preferably in audio, the user in accordance with the aforementioned third question data (step S611).

The user inputs his/her response, preferably in audio, to the question by operating the information input section 1. The arithmetic processing section 4 acquires from the information input section 1 the response inputted by the user (step S612), and determines whether or not the response is "Yes" (step S613).

When it is determined "Yes" in the step S613, the arithmetic processing section 4 sets a representative point, which is assigned to the acquired landmark, as the destination to which a route is searched for, and sets the temporary destination flag as OFF (step S614). Then the arithmetic processing section 4 ends the procedure shown in FIG. 12.

When it is determined "No" in the step S613, a destination specifying section 41 determines whether or not there is any landmark yet to be selected in the first information set (step 5615). When it is determined "Yes" in the step S615, the arithmetic processing section 4 acquires a name of one landmark which is yet to be selected (step S616), and executes the step S610.

When it is determined "No" in the step S615, the destination specifying section 41 sets the representative point, which is assigned to the landmark selected initially, as the destination to which a route is searched for (step S617). Then the arithmetic processing section 4 ends the procedure shown in FIG. 12.

When it is determined "No" in the step S502 shown in FIG. 10, the arithmetic processing section 4 executes a homonymous placenames analyzing process so as to narrow down the candidate destinations to one destination candidate (step S508).

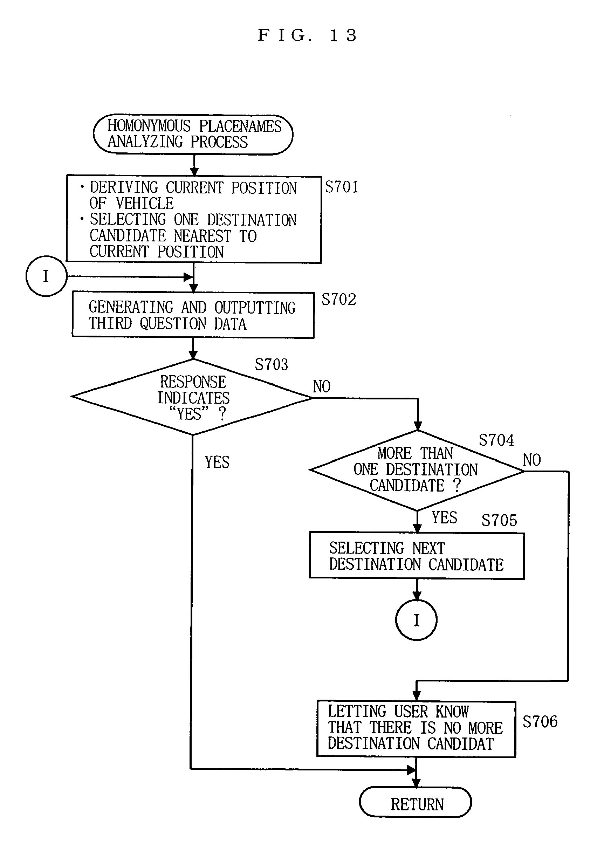

FIG. 13 is a flowchart showing a detailed procedure performed in the step S508. In FIG. 13, the arithmetic processing section 4 derives a current position of the vehicle based on information outputted from the vehicle position and movement detection section 3, and selects from a plurality of destination candidates one destination candidate that is nearest to the current position (step S701).

The arithmetic processing section 4 generates the aforementioned third question data which contains a question asking the user, for example, "Are you sure that prefecture "A" is your destination?" so as to assure whether or not the user wishes to proceed with the ongoing route search with the destination candidate, which is selected in the step S701, and causes the information output section 5 to output, preferably in audio, the question (step S702).

Note that if a question such as "There are "A" in prefecture "X", and "A" in prefecture "Y". Please choose which one is your destination." is to be asked instead of the aforementioned question, a longer time will be required for the inquiry and, thus, a response from the user will also be long. Therefore, it is preferable if the question contained in the third question data is as simple as "Are you sure that prefecture "A" is your destination?". If the question is simple, the response from the user will be as simple as either "Yes" or "No".

Also, since a destination candidate nearest to the current position is provided to the user, a number of times the user is asked the question will be reduced.

The user inputs his/her response, preferably in audio, by operating the information input section 1. The arithmetic processing section 4 determines whether or not the response transferred thereto from the information input section 1 is "Yes" (step S703).

When it is determined "Yes" in the step S703, the arithmetic processing section 4 ends the procedure shown in FIG. 13. By this, the arithmetic processing section 4 returns to the procedure S503 shown in FIG. 10 so as to execute the ongoing route search procedure with the selected destination candidate.

When it is determined "No" in the step S703, the arithmetic processing section 4 determines whether or not there is more than one destination candidate yet to be selected (step S704). When it is determined "Yes" in the step S704, the arithmetic processing section 4 selects a destination candidate, which is yet to be selected and nearest to the current position (step S705). Then the arithmetic processing section 4 executes the step S702.

When it is determined "No" in the step S704, the arithmetic processing section 4 communicates to the user that there is no destination candidate (step S706), then ends the procedure shown in FIG. 13, and ends the step S214.

As the step S214 is executed, a destination or a temporary destination is set. Also, after the execution of the step S214, the arithmetic processing section 4 ends the procedure shown in FIG. 7.

After the procedure shown in FIG. 6 ends, the destination specifying process shown in FIG. 6 ends (step S105).

After the step S105, the arithmetic processing section 4, by using map information which is stored in the map storage section 2, searches for a route to the destination, or a temporary destination, which is set in the aforementioned procedure (step S106).

Then, the arithmetic processing section 4 generates, based on the route found from the search which is executed in the step S106, guidance information which is necessary in order for the navigation device to provide the user with guidance (step S107). For generating the guidance information, commonly known information is to be used.

Then, the arithmetic processing section 4 derives a current position of the vehicle in a manner described above (step S108).

Then, the arithmetic processing section 4 determines whether or not the current position of the vehicle, which is on the route, is at a point which is a predetermined distance before an intersection or a turning point at which the vehicle is to turn (step S109)

When it is determined "No" in the step S109, the arithmetic processing section 4 determines whether or not a temporary destination flag is already set as ON (step S110). As described earlier, when the temporary destination flag is not set as ON in the aforementioned destination specifying process (step S105), a route to a destination of the user is to be searched for.
That is, the current route is valid. Therefore, the arithmetic processing section 4 executes the step S108 so as to continue providing the user with the guidance in accordance with the current route.

On the other hand, when the temporary destination flag is set as ON, a temporary destination such as C1, which is a center point of the area A1 (see FIG. 11), is to be set. In such case, the navigation device is not necessarily searching for a route to the destination of the user, but rather, the navigation device is guiding the user toward an area which neighbors the destination. Under such circumstance, in the arithmetic processing section 4, the arithmetic processing section 4 executes the step S105 once again. In such case, the arithmetic processing section 4 executes a placename-based destination specifying process immediately after it is determined "Yes" in the step S201, which is shown in FIG. 7 (step S214). If the temporary destination flag is already set as ON, it means that the procedure performed during the steps S603 through S608 has already been performed in a previous destination specifying process. Therefore, if the temporary destination flag is already set as ON, it means that the arithmetic processing section 4 has already stored therein a first information set, which is classified at a layer one level lower than a first information set which is used for a previous destination specifying process, and a response of the user for the first information set classified at the lower layer. Under such circumstance, when a destination specifying process is executed repeatedly, a more precise destination is to be found, thus it will be possible for a route searching section 42 to find a route to the destination of the user. For example, suppose that the representative point C1, which is shown in FIG. 11, is set, due to a previous destination specifying process, as a temporary destination, and that an area A1, which matches a destination candidate, is specified. The arithmetic processing section 4 derives C2, which is a center point of an area A2, and sets the C2 as a temporary destination by executing the step S506 which is shown in FIG. 10. By repeating a destination specifying process such as one described above, a destination of the user will be specified, and a route to the destination is to be searched for.

Referring back to FIG. 6, when it is determined "Yes" in the step S109, the arithmetic processing section 4 causes the information output section 5 to output guidance information which is generated by a guidance information generating section 43 (step S111). For example, the information output section 5 provides the user with guidance information, either by an image or audio, when the user reaches a point (e.g., 700m, 300m, 100m, or 10m before an intersection or a turning point where the user is to make a turn).

Then, the arithmetic processing section 4 determines whether or not the vehicle has reached near a destination of the user (step S112). Commonly known technique is to be used in order to determine whether or not the vehicle has reached a destination. For example, when the vehicle has entered a predetermined range of radius of a circle surrounding the destination of the user, it is determined that the vehicle has reached the destination.

When it is determined "No" in the step S112, the step S108 is to be executed. When it is determined "Yes" in the step S112, the arithmetic processing section 4 causes the information output section 5 to output information informing the user that the ongoing guidance information will end, and ends the procedure shown in FIG. 6.

As described above, according to the present embodiment, once an area of a destination is inputted via the information input section 1 (steps S103 and S104), the navigation device attempts to specify, to a certain degree, a destination which may be used for a route search (step S105). However, when the destination is not specified, the navigation device sets a temporary destination flag as ON (step S506). Then, the navigation device searches for a route which leads toward a temporary destination indicated by the temporary destination flag (step S106), and provides the user with guidance information in accordance with the route found by the search (step S107). After the user inputs the area as described above, and the navigation device executes processes to a certain degree, the navigation device is able to provide the user with the guidance information so as to guide the user toward the inputted area, thus it becomes possible for the user to depart for his/her destination without having to wait.

After the guidance information for guiding the user toward his/her destination has started, the navigation device, when a temporary destination flag is set as ON (step S201), refers to a placename which is assigned to an area level classified at a level lower than a placename used previously, and attempts to specify a destination by exchanging a dialogue between the user and the device (steps S605 through S608, or step S604). By this, a new temporary destination will be set, or a destination which is required for a route search will be set. Then the navigation device searches for (selects) a route to the newly set temporary destination or the destination (step S106), and provides the user with guidance information in accordance with the route found (selected) by the search (step S107). As described above, since the destination is specified after guidance information for guiding the user toward an area which neighbors his/her destination has started, it becomes possible for the navigation device to provide the user with guidance information in accordance with an appropriate route to his/her destination.

According to the embodiment described above, a plurality of pieces of question data are outputted. It is preferable that such question data is outputted during a period in which, for example, the vehicle is stopped, or traveling at a slow speed such that the user may not be required to focus keenly on operating the vehicle.

Also, according to description for the present embodiment, the navigation device is mounted on a vehicle, but the navigation device may be mounted on a portable object carried by a user.

Also, according to description for the present embodiment, a computer program is stored in the ROM 44, but the computer program may be distributed in a format of a writable distribution medium, such as a CD-ROM, or programmed in a computer device such that the program can be distributed via a network.

Also, in the embodiment described above, the steps S203 through S210 do not necessarily need to be executed.

### (Second Embodiment)

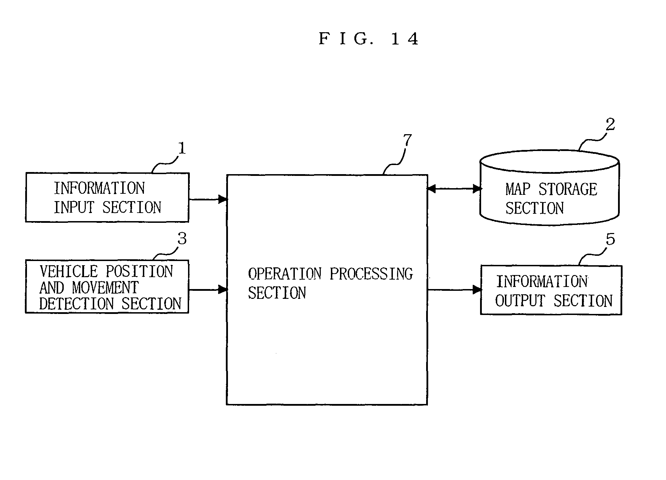

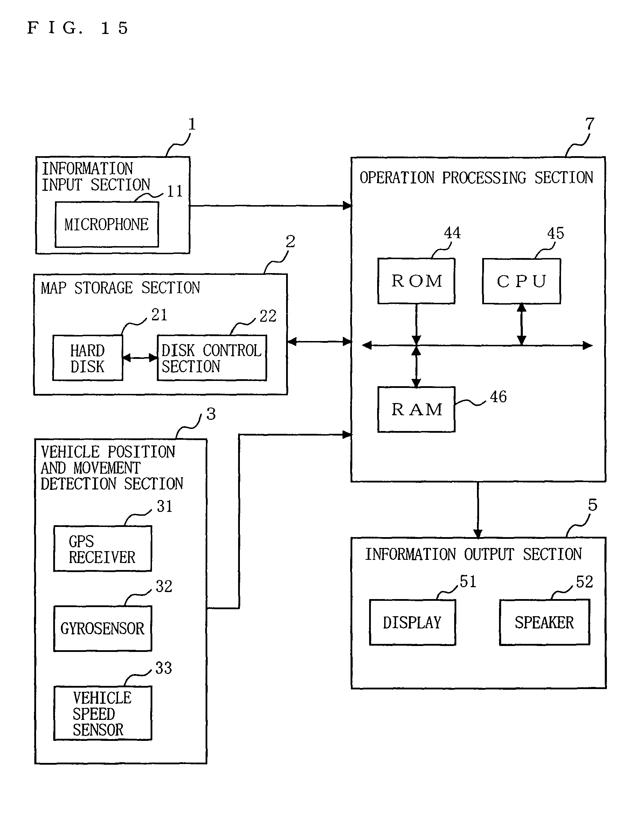

FIG. 14 is a block diagram showing a functional configuration of a navigation device of a second embodiment of the present invention. FIG. 15 is a block diagram showing a configuration of a hardware platform for the navigation device shown in FIG. 14. The navigation device shown in FIGS. 14 and 15 is different from the navigation device shown in FIGS. 1 and 2 in that the arithmetic processing section 4 of the former is replaced with an arithmetic processing section 7. Besides the difference mentioned above, there is no difference between the navigation device shown in FIGS. 14 and 15, and the navigation device shown in FIGS. 1 and 2, thus, in FIG. 14 and 15, elements similar to those illustrated in FIG. 1 are denoted by similar reference marks, and description thereof is omitted.

Although, the arithmetic processing section 7 includes, as the arithmetic processing section 4 does, ROM 44, CPU 45, and RAM 46, a computer program stored in the ROM 44 is different from that described in the first embodiment. In compliance with the computer program in the arithmetic processing section 7, the arithmetic processing section 7 executes following processes.

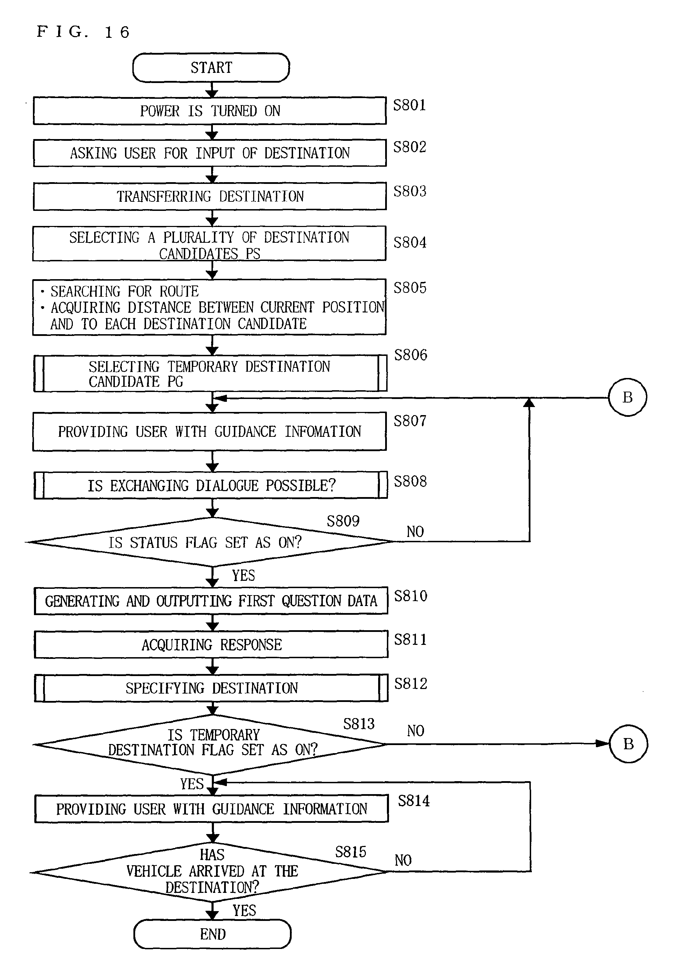

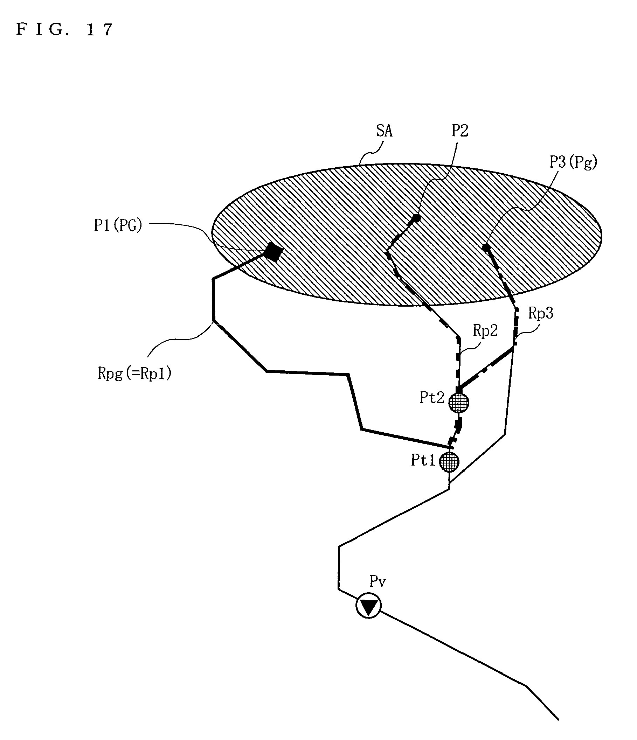

FIG. 16 is a main flowchart showing a procedure performed by the arithmetic processing section 7 shown in FIGS. 14 and 15. With reference to the flowchart shown in FIG. 16, processes performed by the present navigation device shown in FIGS. 14 and 15 will be described. In FIG. 16, after the power of the navigation device is turned ON (step S801), the arithmetic processing section 7, in a same manner as in the steps S103 and S104, acquires a destination inputted by the user (step S802). As described in the first embodiment, the destination inputted by the user is not necessarily usable for processes to be performed later, since such inputted destination may be an area SA which neighbors Pg, which is the destination (hereinafter, such destination will be referred to as a true destination) the user intended to input, wherein the area SA may have a certain size, which is not small, as shown in FIG. 17.

When such area SA is registered as a placename (area) in the placename DB shown in FIG. 3, the arithmetic processing section 7 arbitrarily selects, as a plurality of destination candidates PS (FIG. 16 shows three destination candidates P1 through P3), a plurality of landmarks which are assigned to the target area indicated by the placename (area) (step S804). As an example for the step S804, the mountain "E" shown in FIG. 3 is inputted as the area SA, then, as the plurality of destination candidates PS, the convenience store "F" and the observatory "G" are selected. In the current example of the step S804, a plurality of points in the target area indicated by the placename (area) may be selected from street addresses, which are assigned with an area level "small", as the destination candidates PS.

Then, the arithmetic processing section 7, after acquiring from the vehicle position and movement detection section 3 a current position of the vehicle, searches for a route from the current position to each of the selected destination candidate P (that is, as many routes as the number of the destination candidates are to be searched for). Then the arithmetic processing section 7 also acquires distance between the current position and to each destination candidate (step S805) .

As the arithmetic processing section 7 executes the step S805, the arithmetic processing section 7 searches for routes Rp1, Rp2 and Rp3 to the destination candidates P1, P2 and P3, respectively. Some of the routes among all the routes found by the search above may overlap with one another between the current position of the vehicle Pv to a point Pt on the routes, wherein the Pt is the end of the overlapping portion of the routes and the vehicle is to make a turn at the point Pt. According to the example shown in FIG. 16, Pt1 is shown to indicate an end point of an overlapping portion of the routes Rp1, Rp2 and Ep3, and Pt2 is shown to indicate an end point of an overlapping portion of the routes Rp1 and Rp2.

After the step S805, the arithmetic processing section 7 selects from among the plurality of destination candidates PS one temporary destination PG as shown in FIG. 17 (step S806).

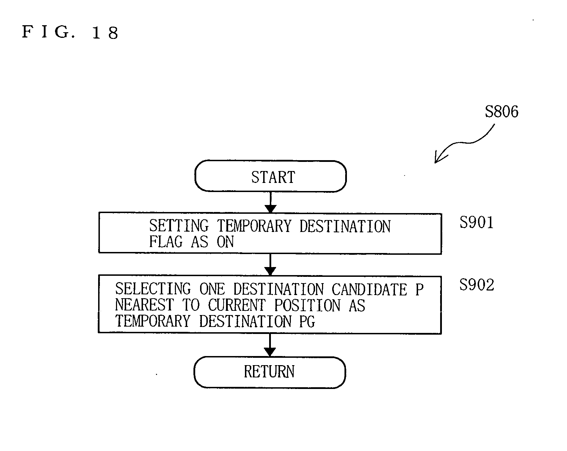

FIG. 18 is a flowchart showing a detailed procedure performed in the step S805 shown in FIG. 16. In FIG. 18, the arithmetic processing section 7 sets a temporary destination flag as ON (step S901).

Then, the arithmetic processing section 7 refers to each distance acquired in the step S805, selects one destination candidate P nearest to the current position of the vehicle as the temporary destination PG, and then selects a route Rpg, which is a route to the temporary destination PG so as to use the Rpg as a basis for guidance information (step S902). In FIG. 17, a route Rpg (= Rp1), which is a route to the temporary destination PG, is shown based on a circumstance in which the destination candidate P1 is selected as the temporary destination PG.

When the step S902 ends, the procedure shown in FIG. 18 ends, and the arithmetic processing section 7 executes the step S807 shown in FIG. 16. The arithmetic processing section 7 provides the user with guidance information so as to guide the user to the destination (as for now, the destination is the temporary destination PG) based on the route selected in the step S902 (step S807). In other words, in the step S807, the arithmetic processing section 7 starts, as soon as the user inputs his/her destination, providing the user with guidance information so as to guide the user toward the temporary destination PG, to be more precise, toward the area SA which neighbors the temporary destination PG. Note that, since a method applied in this embodiment for providing the user with guidance information is the same as one described above, a description thereof is omitted in this embodiment.

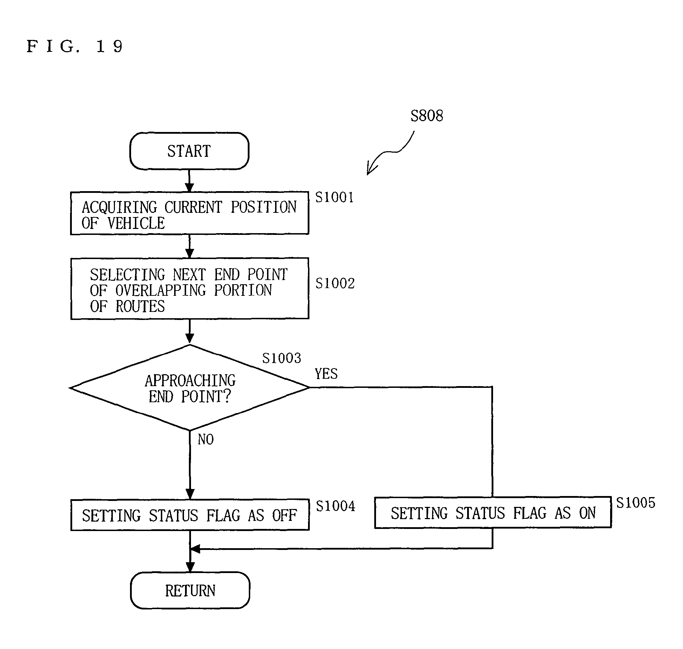

Then, the arithmetic processing section 7 determines whether or not it is possible to exchange a dialogue with the user (step S808). FIG. 19 is a flowchart showing a detailed procedure performed in the step S808 shown in FIG. 16. In FIG. 19, the arithmetic processing section 7 acquires a current position of the vehicle (step S1001), and specifies a Pt (see end points Pt1 and Pt2 exemplarily shown in FIG. 16), which is an end point, which the vehicle is to pass, of the overlapping portion of the routes used for the ongoing guidance information (step S1002).

Then, the arithmetic processing section 7 determines whether or not the vehicle, traveling on the selected route, is within a predetermined distance from the end point Pt which is specified in the step S1002 (step S1003). The predetermined distance is a pre-set value used to determine whether or not the vehicle has come within a certain distance to the end point Pt.

When it is determined "No", which means that there is no need to exchange a dialogue with the user, in the step S1003, the arithmetic processing section 7 sets a status flag as OFF (step S1004). The status flag is a piece of information which is used so as to indicate whether or not there is a need to exchange a dialogue with the user. When it is determined "Yes" in the step S1003, the arithmetic processing section 7 sets the status flag as ON (step S1005).

When the steps S1004 and S1005 end, the procedure shown in FIG. 19 ends, then, the arithmetic processing section 7 executes a step S809 shown in FIG. 16. In the step S809, when the status flag is set as OFF, the step S807 is to be executed again.

When the status flag is set as ON while the step S809 is being executed, the arithmetic processing section 7 generates audio data or image data (hereinafter, the both data will be referred to as first question data) which contains a question asking the user "Would you like to maintain the temporary destination PG as your destination?" so as to ask the user whether or not the temporary destination PG is a true destination, and causes the information output section 5 to output the question in audio or in an image (step S810). By executing the step S810, the present navigation device asks the user for his/her response. In order to respond to the question, the user inputs his/her response by operating the information input section 1. The information input section 1 transfers the inputted response to the arithmetic processing section 7 (step S811).

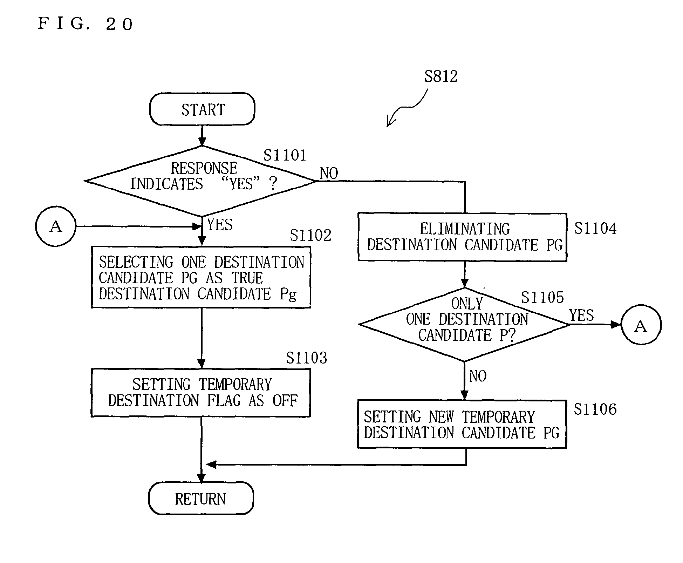

Then, the arithmetic processing section 7 executes a destination specifying process (step S812). FIG. 20 is a flowchart showing a detailed procedure performed in the step S812. In FIG. 20, the arithmetic processing section 7 determines whether or not the inputted response is "Yes" (step S1101). When it is determined "Yes" in the step S1101, the arithmetic processing section 7 determines that the temporary destination PG is the true destination Pg, and selects from among the routes found in the step S805 one route which leads to the true destination Pg (step S1102). Then the arithmetic processing section 7 sets the temporary destination flag as OFF (step S1103). Then the arithmetic processing section 7 ends the procedure shown in FIG. 20.

When it is determined "No", which means that the currently selected temporary destination PG is not a true destination, in the step S1101, the arithmetic processing section 7 eliminates the temporary destination PG (step S1104).

Since there may be a case where only one destination candidate P, which is selected in the step S804, remains after the execution of the step S1104, the arithmetic processing section 7 determines, after executing the step S1104, whether or not there remains only one destination candidate P (step S1105).

When it is determined "Yes" in the step S1105, the arithmetic processing section 7 returns to the step S1102 and executes the steps following thereafter. When it is determined "No" in the step S1105, the arithmetic processing section 7 in a similar manner as in the step S806 selects from among all the remaining destination candidates PS one temporary destination so as to have another temporary destination PG (step S1106). Then the arithmetic processing section 7 ends the procedure shown in FIG. 20.

When the procedure shown in FIG. 20 ends, the arithmetic processing section 7 executes a step S813 shown in FIG. 16. That is, by referring to whether or not the temporary destination flag is ON, the arithmetic processing section 7 determines whether or not a. true destination Pg has been determined (step S813). Then, when it is determined "Yes", which means that the temporary destination flag is set as OFF, the navigation device provides the user with guidance information until the vehicle arrives at the destination Pg (steps S814 and S815). When it is determined "No" in the step S813, the arithmetic processing section 7 executes the step S807.

Due to the above-described procedure, when the vehicle approaches an end point Pt, the arithmetic processing section 7 generates question data requesting the user to specify his/her true destination Pg, and causes the information output section 5 to output the question data. Then arithmetic processing section 7 deletes at least one destination candidate P that, based on the user response, is not a true destination. The arithmetic processing section 7 executes such dialogue each time the vehicle approaches an end point Pt so as to specify one destination candidate which is specified, based on the user response, by the user, or one destination candidate which remained until there is only one destination candidate as a true destination Pg, and further, searches for a route to the true destination Pg. Note that according to the example shown in FIG. 17, the destination candidate P3 is a true destination Pg.

As described above, according to the present embodiment, when a destination is inputted via the information input section 1 (steps S802 and S803), the navigation device specifies the area SA which includes the inputted destination, and selects a plurality of destination candidates PS to which routes may be searched for (step S806). Further, from among the plurality of destination candidates PS, the navigation device sets one destination candidate P as a temporary destination PG, and then starts providing the user with guidance information so as to guide the user toward the temporary destination P (steps S806 and S807). Thus, since the navigation device starts providing the user with guidance information (so as to guide the user toward the temporary destination P) directly after the user inputs his/her destination, the user is allowed to depart toward his/her destination immediately.

After the guidance information has started, the navigation device attempts to specify a destination by exchanging a dialogue with the user (step S809 through S812). By this, it becomes possible for the navigation device to set a new temporary destination PG which is highly probable, or a true destination Pg which is required for a search for a route. The navigation device searchs (select) a route which leads to the newly set temporary destination PG, or to a true destination Pg(step S1102 and S1106), and provides the user with guidance information in accordance with the route which is found (selected) (step S814). As described above, since, after a guidance information has started, a destination is specified and guidance guiding the user toward the area including the destination is provided, it becomes possible for the navigation device to provide the user with guidance in accordance with an appropriate route to his/her destination.

While the invention has been described in details, the foregoing description is in all aspects illustrative and not restrictive. It is understood that numerous other modifications and variants can be devised without departing from the scope of the invention.

### INDUSTRIAL APPLICABILITY

A navigation device according to the present invention may be applicable to a vehicle or a hand-held device, which requires a technical effect in which a user is allowed to depart toward to his/her destination as soon as he/she wishes to depart, and is provided with guidance in accordance with an appropriate route.

## Claims

1. A navigation device, comprising:
an area input section for a user to input a name of an area which neighbors a destination of the user;
a route searching section for searching for a route which leads the user to the area whose name is inputted in the area input section;
a first guidance section for providing the user with guidance in accordance with the route found by the route searching section so as to guide the user to the area whose name is inputted in the area input section;
a destination specifying section for specifying, by exchanging a dialogue with the user, the destination after the guidance by the first guidance section starts;
a route selecting section for selecting a route to the destination specified in the destination specifying section; and
a second guidance section for providing the user with guidance so as to guide the user to the destination specified in the destination specifying section.

2. The navigation device according to the claim 1, wherein the destination specifying section includes:
a question output section for generating and outputting a question to which the user responds by selecting only one of two options offered by the question; and
a response input section for the user to input therein his/her response with respect to the question outputted by the question output section; and
the destination specifying section specifies the destination in accordance with the response inputted by the user in the response input section.

3. The navigation device according to claim 2, wherein the question output section outputs to the user the question which is generated by the question output section preferably when a traveling speed of the user is below a predetermined value.

4. The navigation device according to claim 2, wherein the question outputted by the question output section, and the response inputted into the response input section are in audio.

5. The navigation device according to claim 1, wherein
when a destination is not specified, the destination specifying section sets, after deriving a current position of the user, a temporary destination based on the area whose name is inputted in the area input section and the current position which is derived by the destination specifying section; and
the route selecting section selects a route connecting the current position to the temporary destination which is set by the destination specifying section.

6. The navigation device according to claim 5, wherein when there is a plurality of representative positions pre-assigned to the area whose name is inputted in the area input section, the destination specifying section selects, as a temporary destination, from among the plurality of representative positions a representative position nearest to a current position of the user derived by the destination specifying section.

7. The navigation device according to the claim 5, wherein when the route selecting section is able to execute a route selection, the destination specifying section continues to update the temporary destination until the route selecting section is able to execute the route selection.

8. The navigation device according to claim 1, wherein
when there is a plurality of representative positions pre-assigned to the area whose name is inputted in the area input section, the route searching section searches for a route for each of the representative positions which are set in the area whose name is inputted in the area input section,
the first guidance section provides the user with the guidance in accordance with each route found by the route searching section,
the destination specifying section specifies one of the representative positions, which are set in the area whose name is inputted in the area input section, as a destination of the user, and
the route selecting section selects from among the plurality of routes found by the route searching section one route which leads the user to the destination specified by the destination specifying section.

9. The navigation device according to claim 9, wherein
the destination specifying section includes:
a spot setting section for setting a spot as a spot to output a question, wherein the spot is determined by backing up toward the user as much as a predetermined distance from an end spot of an overlapping portion between the plurality of routes found by the route searching section;
a question output section for outputting to the user a question at the spot set by the spot setting section; and
a response input section for the user to input a response to the question outputted by the question output section,
the destination specifying section specifies a destination of the user in accordance with the response inputted in the response input section.

10. A navigation method, comprising:
an area acquisition step for acquiring in accordance with an input inputted by a user a name of an area which neighbors a destination of the user;
a route searching step for searching for a route which leads the user to the area whose name is acquired in the area acquisition step;
a first guidance step for providing the user with guidance, in accordance with the route found in the route searching step, so as to guide the user to the area whose name is acquired in the area acquisition step;
a destination specifying step for specifying, by exchanging a dialogue with the user, a destination of the user after the guidance by the first guidance step starts;
a route selecting step for selecting a route to the destination which is specified in the destination specifying step; and
a second guidance step for providing the user with guidance so as to guide the user to the destination specified in the destination specifying step.

11. A computer program for providing the user with guidance so as to guide the user to a destination of the user, comprising:
an area acquisition step for acquiring, in accordance with an input inputted by a user, a name of an area which neighbors a destination of the user;
a route searching step for searching for a route which leads the user to the area whose name is acquired in the area acquisition step;
a first guidance step for providing the user with guidance, in accordance with the route found in the route searching step, so as to guide the user to the area whose name is acquired in the area acquisition step;
a destination specifying step for specifying, by exchanging a dialogue with the user, a destination of the user after the guidance by the first guidance step starts;
a route selecting step for selecting a route to the destination which is specified in the destination specifying step; and
a second guidance step for providing the user with guidance, in accordance with the route selected in the route selecting step, so as to guide the user to the destination which is specified in the destination specifying step.

12. The computer program according to claim 12, wherein the computer program is stored in a recording medium.
